# EUROPEAN PATENT APPLICATION

(11) **EP 4 297 393 A1**
(43) Date of publication of application: **27.12.2023**
(21) Application number: 22180142.6
(22) Date of filing: 21.06.2022
(51) Int. Cl.: H04N 5/232, H04N 5/225, H04N 7/18

(54) **OBJECT-DEPENDENT IMAGE ILLUMINATION**

(71) Applicant: Nokia Technologies Oy, 02610 Espoo (FI)
(72) Inventor: LAAKSONEN, Lasse Juhani, 33520 Tampere (FI); VILERMO, Miikka Tapani, 37200 Siuro (FI); LEHTINIEMI, Arto Juhani, 33880 Lempäälä (FI)
(74) Representative: Cohausz & Florack

(57) **Abstract**

An apparatus, method, program and system for adapted illumination based on tracking information is proposed.

## Description

### FIELD

The following disclosure relates to the field of image illumination, or more particularly relates to apparatuses, methods and systems for adjusting the illumination of an object depending on a spatial property of the object, and even more particularly to illuminating a head of a user which is captured.

### BACKGROUND

With the increasing digitalization of both private and work life, there exists a growing need for a seamless, natural and high-quality generation of digital representations of real objects. The leading method for this is image acquisition, in which image data is captured of imaged objects. The objects may be of various natures such as products offered for sale, plants, pets, humans, in particular the head of a human, and various other objects for which a digital representation is required.

In a quest for the highest possible image quality, the quality of cameras, for instance in mobile devices and in other apparatus, has seen dramatic improvements. Under the right circumstances, today's cameras are able to generate digital representations (e.g., images, videos or three-dimensional data) of objects which transport almost all of the characteristics a human would perceive when directly looking at the object.

However, no matter how precise the camera is, the quality of the generated image still critically depends on the lighting and illumination of the imaged object and its surroundings.

Dark environments, for instance, may cause the image sensor to receive too little light and being under-exposed, which may result in generating a noisy image appearance. Bright environments, on the other hand, may cause the image sensor to be overexposed and provide a low image quality, at least in the overexposed parts of the image.

In particular due to the still low dynamic range of today's cameras, compared to the human eye, illumination contrasts are commonly exaggerated in image data.

This issue is aggravated by the fact that not all image properties caused by lighting can be corrected after acquisition in post-processing.

It may thus be desirable to achieve an appropriate, for instance a uniform, illumination of an object of interest to shape the properties of the captured image to maximize the quality of the captured image. However, it is challenging to achieve this, as the captured scenes including imaged objects commonly comprise complex shapes that, when illuminated (e.g. from one direction) without taking into account its specifics, will cause shadows (i.e. under exposed regions) and/or overexposed regions.

### SUMMARY OF SOME EXEMPLARY EMBODIMENTS

It has been recognized that taking into account characteristics of an imaged object when setting the lighting is advantageous for the quality of an image taken of the lighted object.

Ideally, a three-dimensional representation of the object would be available at the time of setting the lighting. The lighting could then be controlled in a way to avoid shadows caused by protrusions and/or recesses of the object in relation to the location of the lighting source. Generating a three-dimensional representation is challenging, as it requires a large amount of sensor data and is computationally expensive. Such a representation may further be unsuitable for moving objects and ultimately not deliver the precision needed for setting the lighting.

It is therefore, inter alia, an object of the subject matter to achieve a desired illumination of complex shaped imaged objects that is computationally affordable, sufficiently precise and requires minimal sensor data.

According to a first exemplary aspect, an apparatus is disclosed, the apparatus comprising means for:
- receiving a tracking information indicative of at least one of an orientation, a location or a distance (e.g. relative to e.g., a field-of-view of a camera, or absolute, respectively) of an object positioned inside or close to a field-of-view of at least one camera;
- controlling at least one parameter of at least one adjustable light source arranged to illuminate at least a part of the field-of-view of at least one of the at least one camera based, at least in part, on the tracking information; and
- capturing at least one image by means of at least one of the at least one camera.

According to a second exemplary aspect, a method is proposed, comprising the steps of
- receiving a tracking information indicative of at least one of an orientation, a location or a distance of an object positioned inside or close to a field-of-view of at least one camera,
- controlling at least one parameter of at least one adjustable light source arranged to illuminate at least a part of the field-of-view of the at least one camera based, at least in part, on the tracking information,
- capturing at least one image by means of at least one of the at least one camera.

The method according to the second exemplary aspect may for instance at least in parts be executed by an apparatus. It is in particular possible that the method in its entirety is executed by an apparatus. At least two steps of the method may be executed by mutually different apparatuses.

An apparatus executing at least one of or all of the steps of the method according to the second exemplary aspect may for instance be the apparatus according to the first exemplary aspect.

The method may also be executed by a system of devices, in particular a system comprising at least one apparatus according to the first aspect and a tracking device.

According to a third exemplary aspect, a tangible computer-readable medium storing computer program code is disclosed, the computer program code, when executed by a processor causing an apparatus to perform and/or control:
- receiving a tracking information indicative of at least one of an orientation, a location or a distance of an object positioned inside or close to a field-of-view of at least one camera,
- controlling at least one parameter of at least one adjustable light source arranged to illuminate at least a part of the field-of-view of the at least one camera based, at least in part, on the tracking information,
- capturing at least one image by means of at least one of the at least one camera.

According to a fourth exemplary aspect, a system is proposed comprising
- at least one tracking device, arranged to determine a tracking information indicative of at least one of an orientation, a location or a distance of an object;
- an apparatus comprising
   - at least one camera,
   - at least one adjustable light source arranged to illuminate at least a part of a field-of-view of at least one of the at least one camera, wherein the object is positioned inside or close to the field-of-view of at least one camera;
- wherein the apparatus further comprises means for
   - receiving the tracking information from the tracking device,
   - controlling at least one parameter of at least one of the at least one adjustable light source based, at least in part, on the tracking information, and
- capturing at least one image by means of at least one of the at least one camera.

According to a further exemplary aspect, a computer program is disclosed, the computer program when executed by a processor causing an apparatus, for instance a server, to perform and/or control the actions of the method according to at least one of the first, second, third or fourth exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect, an apparatus is disclosed, configured to perform and/or control or comprising respective means for performing and/or controlling the method according to at least one of the first, second, third or fourth exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect, an apparatus is disclosed, comprising at least one processor and at least one memory including computer program code, the at least one memory and the computer program code configured to, with the at least one processor, cause an apparatus, for instance the apparatus, at least to perform and/or to control the method according to at least one of the first, second, third or fourth exemplary aspect.

The above-disclosed apparatus according to any aspect may be a module or a component for a device, for example a chip. Alternatively, the disclosed apparatus according to any aspect may be a device, for instance a server or server cloud, smartphone or other user device or user equipment (UE). The disclosed apparatus according to any aspect may comprise only the disclosed components, for instance means, processor, memory, or may further comprise one or more additional components.

Any disclosure herein relating to any exemplary aspect is to be understood to be equally disclosed with respect to any subject-matter according to the respective exemplary aspect, e.g. relating to an apparatus, a method, a computer program, and a computer-readable medium. Thus, for instance, the disclosure of a method step shall also be considered as a disclosure of means for performing and/or configured to perform the respective method step. Likewise, the disclosure of means for performing and/or configured to perform a method step shall also be considered as a disclosure of the method step itself. The same holds for any passage describing at least one processor; and at least one memory including computer program code; the at least one memory and the computer program code configured to, with the at least one processor, cause an apparatus at least to perform a step.

In the following, exemplary features and exemplary embodiments of all aspects will be described in further detail.

In an example embodiment of all exemplary aspects the apparatus comprises means for receiving tracking information.

It has been recognized that for a given class of objects, the object shape may be approximately very similar across the individual members of the class of objects. As soon as the object class is known, an approximate shape is therefore known as well. This is the case, for example, for the human head. Other examples may be a mug, a computer monitor, a chair, and the like.

For an object with an approximately known shape, information about its position, orientation and/or distance (e.g. distance to a camera), which may be denoted as spatial properties, may already imply, allow the derivation of, or even essentially specify an approximate three-dimensional representation of the object. This information about the spatial properties of the object may thus already be sufficient to set the lighting in a desired manner. It may therefore be avoided to go through the trouble of generating a precise three-dimensional representation of the actual imaged object, for instance a point cloud generated by a LiDAR, multiple lenses or the like.

The information such as object position, orientation and/or distance may be derived from an image captured by a camera of the object.

Receiving, as used herein, may denote the process of obtaining information via a communication link. The communication link may for instance be realized in a wireless manner. For example, the communication link may be formed as at least one of a radio link, such as a Wi-Fi or Bluetooth communication link, and/or an optic communication link. The communication link may as well be realized in a wired manner. For example, the communication link may be formed as at least one, two or more data cables through which data is transmitted for instance using a parallel and/or serial communication protocol.

The tracking information which is received by the apparatus may in an example take the form of digitally encoded data. Digitally encoded data may for instance comprise symbols of a pre-defined alphabet. For instance, a binary code may be chosen for the digitally encoded data, in which an arrangement of the symbols 0 and 1 make up the digitally encoded tracking information. The symbols may be discrete, i.e. separable from each other, in digitally encoded data. The symbols may be stereotypic and re-appear in essentially the same form in a given data set. The tracking information may be decodable by a digital processing device. In different representations of the digital data (e.g., radio waves, magnetization of a hard drive, charge state in a solid-state drive) the digitally encoded symbols comprised by the digitally encoded data can be identified respectively. For instance, when transmitting the tracking information as digitally encoded data via a communication link, the individual symbols comprised by the digitally encoded data may thus take the shape of a first physical representation as radio signal properties (such as e.g., phase and amplitude) and may then be transferred to a second physical representation as a charge arrangement in the memory of the receiving device. Before and after reception, the tracking information may be formed as digitally encoded data. In both cases, individual symbols comprised by the digitally encoded data can be identified. The tracking information may therefore in particular be received as digitally encoded data. The tracking information may also be stored as digitally encoded data, in particular in the apparatus and/or by the apparatus.

The tracking information may in particular not be received as a mere analogue observation such as brightness, warmth, magnetic field, an electric field, or the like. From such analogue observations, tracking information in the above sense may be derived by appropriate analogue sensors and a subsequent digital processing. But such analogue observations do not themselves contain any sort of digitally encoded tracking information, in particular no identifiable symbols, in particular no discrete symbols, in particular no stereotypical symbols that re-appear. Receiving such analogue observations, for instance by a sensor, does therefore not equate to receiving tracking information as digitally encoded data in the sense of the subject matter that may be received by a communication interface.

Because the tracking information may already be obtained in a digitally encoded form, the apparatus according to the first exemplary aspect may not require sensors, for instance analogue sensors, in particular for physical quantities, for its reception. Instead, a generic communication interface suffices. Digitally encoded data transmission is also not prone to artifacts by e.g., interfering sources. By receiving the tracking information, in particular as digitally encoded data, the apparatus according to the first exemplary aspect may be informed of at least one spatial property of an object (e.g., location, orientation and/or distance) in a reliable way. In particular comparing to an approach where the apparatus according to the first exemplary aspect attempts to derive the object location, orientation and/or distance by means of, for instance, an image sensor, a magnetic sensor, a temperature sensor and/or the like. The indication of the tracking information may be more precise than such derived information and requires no estimation procedure by the respective apparatus. Additionally, the tracking information may be available for object configurations in which deriving such information from sensors such as image sensors by an appropriate processing fails. For instance the object may turn in a way which hides at least a part of the object features that are used for tracking. The object may also leave the field-of-view. An additional similar object may enter the field-of-view and thus confuse the image recognition. This may allow that (e.g. all of) such complications are eliminated by receiving tracking information, in particular in a digitally encoded form.

The apparatus according to the first exemplary aspect may thus for example comprise at least means for receiving tracking information in a digitally encoded form

The tracking information is indicative of at least one of an orientation, a location or a distance of an object.

The orientation, location and/or distance of the object may for instance be given as an absolute information, e.g. defined in a global coordinate system and/or with respect to a given reference frame such as a defined environment in which image acquisition is to be carried out. The orientation, location and/or distance of the object may also be defined in a relative manner. For example, the orientation, location and/or distance of the object may be specified relative to the apparatus according to the first exemplary aspect, in particular relative to the orientation, location or distance of the respective apparatus. Alternatively or additionally, the orientation, location and/or distance of the object may be specified relative to at least one of a camera, a field-of-view of a camera, a light source, the cone of light of a light source, and/or a combination thereof.

An object may be positioned inside or close to a field-of-view of the at least one camera.

The object of which the orientation, location and/or distance is indicated by the received tracking information may thus be positioned inside or close to the field a view of the at least one camera.

The field-of-view of such at least one camera may be defined as a volume originating in the optical center of the camera lens and extending along the optical axis of the camera with an increasing cross-section of a defined shape. The camera may be capable of capturing image data from objects within the field-of-view. Depending on the type of lens, the field-of-view can be wider or narrower, i.e. have a lower or higher cross-section at a given distance from the camera. For instance, if the camera comprises a fish eye lens, the field-of-view is particularly wide whereas the field-of-view may be narrower for a telescopic lens.

For a given distance from the camera, in particular from the lens, in particular from the center of the lens, a cross-section of the field-of-view may be defined as the surface of a section through the field a view along a plane perpendicular to the optical axis of the camera. The cross-section of the field-of-view can, for a rectangular image sensor, take a rectangular shape. The area of the cross-section of the field a few thus rises with increasing distance from the camera.

A diameter of the field-of-view may additionally be defined as the diameter of the cross-section of the field-of-view. Typically, a diameter of a cross-section of a field-of-view may be defined for a given distance to the camera. A maximum diameter may be defined as the largest distance between two points positioned on the circumference of the cross-section of the field-of-view. A mean diameter may for instance be defined as the average across distances between two points on the circumference, wherein the two points are the intersections between the circumference and a straight line intersecting the center of mass of the cross-section, wherein the average is computed across (e.g. all) possible orientations of the straight line. In case of a rectangular cross-section, at least two diameters may be defined. A short diameter may correspond to the extent of the cross-section along a shorter edge of the rectangle, a wide diameter corresponds to the extent of the cross-section along the longer edge of the rectangle. A mean diameter may be defined as the average between the short diameter and the wide diameter.

When the object is positioned inside the field-of-view, this may denote that at least part of the object is positioned inside the field-of-view of the respective camera. The camera is thus capable of capturing at least a part of the object in an image. In particular at least a part of the object is positioned inside the volume described by the field-of-view. In particular, the object may be positioned essentially entirely inside the field-of-view of the camera.

An imaged extent of the object may be defined based on a projection of the object in the direction of the optical axis of the camera. The imaged extent may for example be the extent of the projection along a given axis. The axis may be oriented perpendicular to the optical axis. The axis may for example be oriented in parallel to the short edge of a rectangular field-of-view, yielding a first imaged extent of the object, or parallel to the long edge of a rectangular field-of-view, yielding a second imaged extent of the object. For the object, a maximum imaged extent may be defined as the maximum difference between two points which are positioned within the projection of the object. A mean imaged extent of the projection of the object may for instance be defined as the average across distances between two points on the circumference of the projection of the object, wherein the two points are the intersections between the circumference and a straight line intersecting the center of mass of the projection, wherein the average is computed across all possible orientations of the straight line.

It is also possible that the respective object is close to the field-of-view of the respective camera. Being close to the field-of-view of the camera may in particular be defined in a spatial manner. In particular, the object may not be positioned inside the field-of-view when it is described as being close to the field-of-view. In particular, the object may be entirely outside the field-of-view. There may thus be a distance between the field-of-view and the object. For instance, in order for the object to be considered close to the field-of-view, the spatial distance between the object and the field-of-view may be less than a predefined threshold, for instance a multiple or fraction of the diameter by a factor of 5, 4, 3, 2, 1, 0.9, 0.8, 0.7, 0.6, 0.5, 0.4, 0.3, 0.2 or 0.1, in particular the short diameter, wide diameter (for a rectangular cross-section), or mean diameter of the field-of-view and/or of the imaged extent the object, in particular the first imaged extent, the second imaged extent, the maximum imaged extent and/or the mean imaged extent. The distance between the field-of-view and the object may for instance be defined as the minimum distance between the volume occupied by the object and the volume occupied by the field-of-view. Alternatively, the distance may be defined as the minimum distance in a two-dimensional plane essentially perpendicular to the optical axis that intersects both the field-of-view and the object.

The object being close to the field-of-view of the respective camera may also be defined in a temporal manner. For instance, the time interval between the object exiting the field-of-view (i.e. starts to be outside the field-of-view, after having been positioned inside the field-of-view) and reentering the field-of-view (i.e. starts to be inside the field-of-view, after having been positioned outside the field-of-view) may stay below a predetermined threshold, for instance 0.1, 0.2, 0.5, 1, 2, 5, 10, 30, 60, 120 or 300 seconds, in order to still be considered close to the field-of-view of the respective camera.

By considering one or more objects which are not inside the field-of-view of the respective camera, the apparatus according to the first exemplary aspect can handle objects exiting and/or entering the field-of-view. It may in particular receive tracking information from an object which is currently not positioned inside the field-of-view. Thereby, the apparatus according to the first exemplary aspect can for instance be prepared for an entry of the object into the field-of-view before it is happening. The apparatus according to the first exemplary aspect may also control aspects of at least one camera or a light source while the object is not inside the field-of-view.

The apparatus according to the first exemplary aspect may further comprise means for controlling at least one parameter of at least one adjustable light source.

The at least one adjustable light source may in particular take the form of at least one of a lamp, an incandescent light, a light emitting diode (LED), an organic light emitting diode (OLED), multiple single light sources, for instance of mutually different properties, such as for instance colors and/or other properties, a display, a spot, a flash, a diffuse light source or a combination thereof.

At least one parameter of the at least one adjustable light source may be adjustable. The respective adjustable light source may for example be adjustable by means of at least one of a control input to a suitable driver circuitry, manually, by means of an actor, for instance a motorized actor, or a combination thereof.

In case of two or more adjustable light sources, the adjustable light sources may be mutually different. For instance, the adjustable light sources may differ in their one or more parameters which can be adjusted. The adjustable light sources may differ in their type of light generation technique. The adjustable light sources may differ in their illumination characteristics, be it fixed characteristics or adjustable characteristics that can be changed via parameters of the respective adjustable light source. Such illumination characteristics may for instance comprise color, size of an illuminated volume and/or size (i.e., width, height) and/or shape of an illuminated cone of light, degree of diffusion, maximum brightness or combinations thereof.

By combining mutually different adjustable light sources, a particularly high diversity of lighting caused by the light sources can be achieved. The illumination of the object, and in instances of its environment, may therefore be controlled in a particularly wide array of possibilities.

At least two light sources may be similar, in particular essentially identical in their characteristics and/or adjustable parameters to one another. Choosing at least two light sources as being similar to each other may have the technical effect of their illuminations to combine seamlessly. For instance, by combining similar light sources, in particular located at mutually different positions, a combined illumination caused by the light sources may approach the illumination effect of a larger (compared to the individual light sources) diffuse light source. Choosing at least two light sources similar to each other may further enable a symmetrical arrangement of light sources. For instance, if two similar light sources are separated by a given distance along a distance direction and emit light in a direction essentially perpendicular to the distance direction, rotating this arrangement of light sources by 180° around the direction in which light is emitted does not alter the illumination caused jointly by the two light sources.

The at least one adjustable light source is arranged to illuminate at least a part of the field-of-view of at least one of the at least one camera.

For a respective adjustable light source, an illuminated volume may be defined. The illuminated volume is in particular the spatial volume comprising one or more (e.g. all) positions at which photons stemming from the light source can be received. The illuminated volume may in a narrower sense be defined as the spatial volume in which a minimum illumination intensity can be received from the light source in a direct line from the light source, in particular without taking into account reflections from the environment. In a simple variant, the illuminated volume of the light source may take the shape of a cone originating at the light source and opening in the direction pointing away from the light source in the direction of illumination. The cone may in particular have a round and/or elliptic cross-section but may as well have a different cross-section shape such as rectangular for instance.

When a respective adjustable light source is arranged to illuminate at least part of the field-of-view of a respective camera, this may denote that the field-of-view of the camera and the illuminated volume of the adjustable light source overlap. Additionally or alternatively, a respective adjustable light source may be considered to illuminate at least part of the field-of-view of a camera if the light source illuminates at least part of an element visible to the respective camera. For instance, the light source may be arranged to illuminate at least part of the object, in particular (e.g. only) at least a part of the object and no other components of the imaged scene. The light source may also, at the same time, be configured to additionally illuminate at least part of at least one element within the image captured by the camera which is different from the object. In any of these cases, the adjustable light source may be considered to illuminate at least part of the field-of-view of the respective camera.

The at least one adjustable light source may be controlled by corresponding means of the apparatus according to the first exemplary aspect. At least one parameter of the adjustable light source may be controlled based, at least in part, on the tracking information.

In case of multiple (e.g. at least two) adjustable light sources, the means for controlling the at least one adjustable light source of the apparatus are in particular capable of controlling the adjustable light sources individually, in particular independent of each other. The parameters of two respective adjustable light sources may for instance assume mutually independent and/or different values. It is also possible to control at least two light sources jointly, i.e. the control of the at least one first adjustable light source may be at least in part dependent on the control of at least one second adjustable light source.

By basing the control of the adjustable light source at least partially on the received tracking information, the apparatus may be able to adjust the lighting to at least one of an orientation, a location or a distance of the object. The illumination of the object and/or of other elements within the field-of-view of at least one of the at least one camera may therefore be improved compared to an illumination which does not take into account the characteristics of the imaged object. In particular, the apparatus according to the first exemplary aspect can derive, based on the orientation, location and/or distance of the object, how to achieve a desired illumination pattern of the overall image acquired from the field-of-view of the at least one camera. In particular in a case where the object and at least part of its shape characteristics are essentially known to the apparatus according to the first exemplary aspect, the orientation, location and/or distance may enable an approximation of a three-dimensional model of the object. The illumination generated by the at least one light source may then be adapted to the three-dimensional features of the object based on its current orientation, location and/or distance.

For instance, if the object is the head of the user (of the apparatus according to the first exemplary aspect), knowing its orientation, location and/or distance may enable an illumination caused by at least one of the at least one adjustable light source that avoids an accentuation (through lighting) of parts of the head, which should not be accentuated (e.g., the ear or the chin), and/or may avoid shadows caused by protrusions (e.g., the nose). The illumination direction may for instance be adjusted as a parameter of at least one adjustable light source in these cases. For instance, a sideways illumination of at least one protrusion may be avoided and instead, a frontal illumination onto the protrusion may be favored.

The apparatus according to the first exemplary aspect may further comprise means for capturing at least one image by means of at least one of the at least one camera. The apparatus according to the first exemplary aspect may alternatively or additionally configured to capture multiple images, in particular it may be configured to capture a video.

At least one or multiple images captured by at least one of the at least one camera of the apparatus according to the first exemplary aspect may for instance capture at least a part of the object.

Through the combination of the (1) receiving of tracking information, (2) controlling an adjustable light source and (3) capturing an image, the apparatus according to the first exemplary aspect may be capable of generating a desired digital representation of an object through an adapted illumination of an object (and in some instances of its environment). In particular by receiving the tracking information, in particular as digitally encoded data, the illumination can be optimized in a particularly precise and computationally cheap way.

The apparatus according to the first exemplary aspect may in particular be configured to continuously receive tracking information, control the adjustable light source and capture images. In particular, the apparatus according to the first exemplary aspect may be configured to capture at least one image or in particular a video comprising multiple images, using at least one camera while at the same time controlling the illumination of the imaged scene (i.e., the object and in some cases other parts of the scene) depending on the received tracking information. The apparatus according to the first exemplary aspect may additionally or alternatively be configured to capture single, static images with controlled lighting based on tracking information.

According to an embodiment of all exemplary aspects, the apparatus comprises means for transmitting the at least one captured image, in particular to a receiving party, in particular to another apparatus. The means for transmitting may in particular be in communication with a communication network such as for example the cellular communication network and/or a Wi-Fi via which the apparatus is for instance connected to a local network and/or to the internet. The means for transmitting the at least one captured image may be in particular configured to transmit one image, multiple images, a stream of images, a video, in particular a live video stream of a video captured by at least one of the at least one camera of the apparatus.

According to an embodiment of all exemplary aspects, the apparatus comprises means for obtaining at least one image, in particular multiple images, in particular a video, in particular a live video stream, in particular from a third party, in particular from another apparatus. The means for obtaining are in particular configured to receive image data from a device which is in turn configured to receive, and or receives, video data from the apparatus.

According to an embodiment of all exemplary aspects, the apparatus comprises at least one of the at least one camera.

The at least one of the at least one camera may for instance be mechanically connected to the apparatus, for instance the camera may be fixed to the apparatus. The camera may in particular be integrated with the apparatus. The camera may also be physically connected to the apparatus in a flexible manner, for example by means of a flexible cable. The camera may also be physically disconnectable from the apparatus, for example physically disconnected. In addition, the camera and the apparatus may in this case communicate by means of a (e.g. wireless) communication interface.

According to an embodiment of all exemplary aspects, the apparatus may comprise at least one of the at least one adjustable light source.

The light source may for instance be mechanically connected to the apparatus, for instance fixed to the apparatus. The light source may in particular be integrated with the apparatus. The light source may also be physically connected to the apparatus in a flexible manner, for example by means of a flexible cable. The light source may also be physically disconnectable from the apparatus. For instance, the apparatus may in this case control at least one parameter of the at least one light source by means of a (e.g., wireless) communication interface.

According to an embodiment of all exemplary aspects, the object is a head of a user (e.g. of the apparatus according to the first exemplary aspect).

In this case, the orientation of the object may for instance correspond to the gaze of the user.

Alternatively or additionally, the gaze of the user may be independent from the orientation of the head. In this case, the gaze may be indicated by the received tracking information separately from the orientation. The gaze may in this case for instance be determined by an appropriate sensor detecting the position of at least one eye of the user.

The orientation, the distance and/or the location of the object may provide the apparatus with information about a state of the user. At least one of the at least one adjustable light source may thus be controlled depending on the state of the user. The state of the user may in particular comprise at least the states focused and distracted. For instance, if the head of the user oriented towards the apparatus this may hint towards an attention of the user being directed onto the apparatus. The state of the user may be identified as focused. A gaze of the user pointing away from the apparatus may hint towards the user directing attention to something else. The state of the user may then be determined as distracted. The at least one of the at least one adjustable light source may then be controlled by the apparatus in a way to take into account and/or accommodate for these different states of the user.

As already alluded to above, the head of the user has, within the biologically expectable variation, a known expected shape. This knowledge of the object shape may be used by the apparatus according to the first exemplary aspect. In particular the respective apparatus may be configured to expect the head of user as the object.

The apparatus according to the first exemplary aspect may also be configured to classify an imaged object. In particular, the apparatus may be configured to classify imaged objects into the classes such as "head of a user" and "not head of a user". It may therefore detect the head of a user. The known shape of the object, in particular the head of the user may be used to adjust the lighting in such a way that the characteristics of the object, in particular of the head, are taken into account.

Known recesses and protrusions of the object may be taken into account as well, when controlling a respective adjustable light source, so that shadows and over-exposures can be avoided. Parts that are typically desired to be highlighted may be illuminated more strongly than others. Parts that are typically desired to be hidden may be illuminated less.

For example in the case of a head of a user as the object, the illumination caused by at least one of the at least one adjustable light sources may be directed towards the center of the face (highlighted), but not to an ear or a chin (hidden). For instance if the head is oriented sideways, the illumination may be also be directed sideways in order to illuminate the face of the user as centrally as possible. If the head of the user is oriented centrally towards the apparatus, an (e.g. essentially) symmetrical and/or central illumination from the apparatus to the head of the user may be chosen. In this way, shadows, in particular caused by protrusions (e.g., nose) and/or recesses (e.g., eye socket), are reduced.

According to an embodiment of all exemplary aspects, the means for receiving the tracking are configured to receive the tracking information from a tracking device.

The apparatus according to the first exemplary aspect may for instance be configured to communicate with a tracking device, in particular to received tracking information in a digitally encoded form. To this end, the apparatus according to the first exemplary aspect may comprise the means for receiving tracking information, in particular in a digitally encoded form, from the tracking device.

The tracking device may be configured to estimate at least one of an orientation, a location or distance of the object. To this end the tracking device may for instance comprise sensors which are configured to detect at least one of these quantities. The tracking device may for instance comprise at least one inertial sensor, such as an accelerometer or a gyroscope. The tracking device may also comprise other sensors such as optical sensors, electromagnetic sensors, acoustic sensors and/or combinations thereof.

The tracking device may in particular at least partially be in mechanical contact with the object. Thereby, the orientation, location and/or distance of the object may directly be inferred from the orientation, location and/or distance (in particular with respect to the apparatus, the at least one camera and/or the at least one light source) of the tracking device itself.

The tracking device may be a head tracking device. For example, an optical, magnetic, electrostatic, inertial head tracking device and/or combinations thereof. Such a head tracking device may be comprised by or be represented by earbuds, headphones or the like. A head tracking device is configured to estimate the orientation, location and/or distance of a head. The head tracking device may in particular take the shape of a head tracking audio device, in particular head tracking speaker or head tracking pair of speakers, in particular head tracking headphones and/or head tracking earbuds. The head tracking device may be in mechanical contact with the head of a user. The head tracking device may therefore particular be positioned at least partially close to and/or in at least one of the ears of the user.

According to an embodiment of all exemplary aspects, the apparatus is a user device.

The apparatus may particular be a mobile phone, a tablet, a PDA, a laptop, a virtual presence device, a smartwatch, a wearable, and/or combinations thereof such as for instance a mobile phone connected to a smartwatch or the like.

According to an embodiment of all exemplary aspects, the apparatus may comprise at least one face (e.g. a first face and a second face). A face may denote a surface of the apparatus. A face may for instance be a part of an outer surface of the apparatus, for instance a part of a display, a housing or combinations thereof. For instance, a face may be a connected surface region throughout which an orientation of the surface, in particular represented by a normal vector on the surface, stays within a pre-defined orientation range. For instance, the pre-defined orientation range may be an orientation of a pre-defined part of the face and/or a given surface region +/- a tolerance of at most 1°, 2°, 5°, 10°, 15°, 20°, 30°, 45° or 60°. The face may thus be delimited by an edge at which the orientation of the outer surface of the apparatus changes more than allowed by the predefined range of orientations. Such a face may for instance be an essentially rectangularly shaped face with two short edges parallel to each other and two long edged parallel to each other which are longer than the short edges and perpendicular to them.

According to an embodiment of all exemplary aspects, at least one of the at least one camera may be located on a first face of the apparatus. Additionally or alternatively, at least one of the at least one adjustable light source may be located on the first face of the apparatus. Thus, at least one of the at least one camera and at least one of the at least one adjustable light source may be located on the same face, in particular the first face, of the apparatus.

It is also possible that at least one of the at least one camera is located on a first face of the apparatus, while at least one of the at least one adjustable light source is located on a second face of the apparatus. The second face of the apparatus may in this case be different from the first face. For instance, the first face of the apparatus can point in essentially the opposite direction of the second face of the apparatus. A light source on a face different from a face on which at least one camera is arranged may be considered a background light source, in particular for that camera.

In particular, the apparatus may further comprise at least one display. The display may for instance be an LCD-, LED-, IPS-, OLED-, E-Ink- or other type of display. At least one of the at least one display of the apparatus may be located on a face of the apparatus, in particular on the first face and/or the second face, of the apparatus. The face on which the display is arranged may be referred to as front face and a face of the apparatus, which points to essentially the opposite direction compared to the front face may be considered the rear face.

At least one of a respective camera or a respective light source may be located on a face of the apparatus on which also, at least one of the at least one display is located. At least one of a respective camera or a respective light source may be positioned adjacent to a respective display. For instance, the face may comprise a frame between the outer edge of the face and the edge of the display. The light source and/or the camera may be positioned on the frame. Additionally or alternatively, the light source and/or the camera may be positioned outside the frame and in particular at least partially inside the display.

For the display, a display plane may be defined. In case of a display with a flat surface, the display plane may simply be defined as the plane in which the flat display surface lies. In case of a display which deviates from a flat surface form, such as a bent surface, the display plane may for instance be defined as the regression plane with respect to a set of points regularly distributed on the surface of the display. A display direction may be defined as a vector oriented essentially perpendicularly to the plane of the display. The display direction points away from the surface of the display, onto which a user of the display can look in order to see an image presented by the display.

For the camera as well, a camera direction may be defined. The camera direction is oriented essentially parallel to the optical axis of the camera and points away from the sensor of the camera.

At least one of the at least one display and at least one of the at least one camera may point approximately in the same direction. This may for instance mean that the scalar product between the vector of the display direction of the respective display and the vector of the camera direction of the respective camera is positive. The display direction and the camera direction may alternatively or additionally enclose an angle of less than 1°, 2°, 5°, 10°, 15°, 20°, 25°, 35°, 45°, 60° or 75°.

By at least one of the at least one camera and at least one of the at least one display pointing in the same direction, the device may for instance be utilized for videoconferencing. The user using the device may at the same time be captured by the respective camera and watch an interlocutor by means of the display.

A front face (e.g. the first face) of the apparatus may point to a user in normal operation. The front face of the apparatus in particular comprises at least one of the at least one display of the apparatus. At least one of the at least one camera may be located on the front face. Additionally or alternatively at least one of the at least one adjustable light source may be located on the front face. On the front face of the apparatus, at least one of the at least one camera, at least one of the at least one display and at least one of the at least one light source may be arranged.

A rear face (e.g. the second face) of the apparatus may point away from a user in normal operation. The rear face of the apparatus in particular comprises at least one of the at least one camera. Additionally or alternatively, at least one of the at least one adjustable light source may be located on the rear face.

On the respective face of the apparatus according to the first exemplary aspect, in particular on the respective face, on which at least one camera is arranged, in particular on the front face, multiple adjustable light sources may be arranged. The light sources may for instance be positioned adjacent to edges of the face of the apparatus. The at least two adjustable light sources arranged on the face, may for instance be positioned at mutually different locations on the face. In particular, at least two of the at least two adjustable light sources may be arranged at opposite edges of the respective face. More than two light sources may be arranged on the apparatus according to the first exemplary aspect, in particular on the face of the apparatus, in particular on the front face. In an example, a light source may span a part of an edge. For instance, the light source may essentially span one entire side edge of a face. In an example, at least two side edges of face are spanned by a light source. In an example, at least one or multiple light sources essentially span the circumference of the face.

For instance, the respective face of the apparatus according to the first exemplary aspect, on which the at least two light sources are arranged, may be shaped (e.g. essentially) rectangular. The face may have two long edges, which are essentially parallel to each other. The face may further have two short edges, which are essentially parallel to each other and essentially perpendicular to the long edges.

If here, in the following and/or the foregoing two elements are described as being essentially in parallel to one another, an angle enclosed between the elements may be 0° +/- less than 1°, 2°, 3°, 5°, 10°, 15°, 20°, 30° or 45°. If here, in the following and/or the foregoing two elements are described as being essentially perpendicular to one another, an angle enclosed between the elements may be 90° +/- less than 1°, 2°, 3°, 5°, 10°, 15°, 20°, 30° or 45°. When here, in the following and/or the foregoing a plane is described as pointing (essentially) in a given direction, this can be understood as the normal vector on the plane is pointing (essentially) in the given direction. If here, in the following and/or the foregoing two directions are disclosed to point in the same direction, this may for instance mean that the scalar product between the first direction and the second direction, respectively represented as a vector, is positive. The two directions may alternatively or additionally enclose an angle of less than 1°, 2°, 5°, 10°, 15°, 20°, 25°, 35°, 45°, 60° or 75°.

At least one of the at least two light sources may for instance be positioned adjacent to a first of the short edges while at least one other of the at least two light sources may for instance be positioned adjacent to a second of the short edges. The first and the second of the short edges are different from each other and are in particular opposite to each other. In an example, at least one of the at least one camera may then be positioned adjacent to the first or the second short edge. The face may in this case be formed face comprising at least one display.

In an example, at least one of the at least one camera is positioned between at least a first and a second adjustable light source. Being positioned between the first and second adjustable light sources may for instance mean, that the camera is positioned essentially on a straight line connecting the first and the second adjustable light source. The camera may in a broader sense be distanced from this line, in particular in a direction essentially perpendicular to the line. In all these cases, the camera may be described as being positioned between the first and second adjustable light source.

The camera may be positioned centrally between the first and second adjustable light source. In this case, the camera may be positioned essentially on the straight line between the first and the second adjustable light source, while being distanced by the same distance from both adjustable light sources. The camera may in this case also be distanced from the line, in particular in a direction perpendicular to the line. In these cases, the camera may be denoted as being positioned centrally between a first and second adjustable light source. The camera direction may be oriented essentially perpendicularly to the straight line connecting the first and the second adjustable light source.

By positioning the camera between, in particular centrally between, a first and second adjustable light source, an imaged object can be illuminated from two different sides with respect to the camera position, imaged region and/or the field of view of the camera. In a central position of the camera between the light sources, a symmetry of illumination caused by the respective adjustable light source can be achieved.

Arranging the respective camera between at least two light sources may allow for controlling the illumination caused by the adjustable light sources. For an object placed centrally in front of the camera, the light sources can illuminate the object evenly, without correcting for intensity differences caused by the difference in distance between the object and the respective adjustable light source. When the object is displaced or turned towards a first one of the at least two adjustable light sources and away from the other (in particular a second, in particular of two) adjustable light source, a respective corresponding control of the first light source and a respective control of the second light source may be chosen. In particular, the first adjustable light source may for instance be dimmed and the other light source may be controlled to emit more light. If the position or orientation of the object is now opposite, i.e. oriented and/or moved towards the second adjustable light source and away from the first adjustable light source, the respective chosen controls may simply be applied to the respective other adjustable light source. Also here, a symmetry between light source positions relative to the camera and/or light source characteristics may be advantageous for a simple control pattern.

By positioning the light sources at mutually different positions, in particular at opposite edges of the face, in particular at opposite short edges of a rectangular face, the difference in an illumination caused by the respective light sources is maximized. Thereby, controlling the respective adjustable light sources individually by the apparatus according to the first exemplary aspect can cause stronger differences on the illumination jointly caused by the light sources compared to light sources positioned in proximity to each other.

At least two of the adjustable light sources may be arranged on a face of the apparatus according to the first exemplary aspect, on which at least one of the at least one display and at least one of the at least one camera are arranged.

It is also possible that at least one of the at least one display and at least one of the at least one camera are located on different faces of the apparatus according to the first exemplary aspect.

According to an embodiment of all exemplary aspects, at least one of the at least one adjustable light source is configured to illuminate at least part of a background. This type of adjustable light source may be denoted as background light source. A background may be defined as the part of an image captured by at least one of the at least one camera that is not occupied by the object. The background may alternatively or additionally be defined as the part of the image seen which is different from the object. In example, if the object is the head of the user anything different from the head of the user (and elements directly attached to the head such as for example headphones earbuds, hats, etc.) may be considered as background.

The at least one background light source may also illuminate at least a part of the object. It is also possible, that this adjustable light source essentially only illuminates the background.

For instance, the at least one background light source may be mechanically fixed to the apparatus according to the first exemplary aspect or (e.g. only) be in communication connection with the apparatus. To enable a selective illumination of the background, the background light source may for instance emit light at a narrow angle with a high intensity. The background light source may additionally be oriented in a way that its cone of light does not intersect with the field-of-view of at least one of the at least one camera and/or does not hit the object but in particular passes by the object onto the background of the image scene. For instance, the background light source may be arranged on a side edge of the apparatus according to the first exemplary aspect, a side edge being oriented essentially perpendicularly to the front face. Additionally or alternatively, a background light source may be arranged on the rear face of the respective apparatus. Thereby, the camera will (e.g. only) capture the reflection of the illumination caused of the background light source from objects of the environment and thereby illuminate the background (e.g. only). Reflections from the environment onto the object may occur but will be much fainter than a direct illumination of the object. For instance, a background light source may be positioned behind the object from the perspective of at least one of the at least one camera. The background light source may, alternatively or additionally, be positioned outside of the field-of-view of at least one of the at least one camera and/or all of the at least one camera.

At least one of the at least one adjustable light source may become a background light source depending on the orientation, position and/or distance of the object. If, for instance, the respective adjustable light source is arranged to illuminate a part of the scene, in which the object currently is not positioned, the light source may be considered a background light source. The apparatus according to the first exemplary aspect may thus be configured to dynamically classify light sources as (a) background light sources when they at least primarily illuminate the background, i.e. not the object, and as (b) light sources illuminating at least part of the object (object light sources).

A light source which primarily illuminates the object may be considered an object light source. An object light source may additionally illuminate at least part of the background. An object light source may also at least almost exclusively illuminate the object.

By configuring at least one of the at least one adjustable light source to illuminate the background, in particular essentially only the background, the illumination of the imaged scene including the object may be particularly well controlled. It has been recognized that a prominent cause of low image quality resides in differences in the illumination level between background and object. At the same time, it has been recognized that differences between the illumination of the background and the object may also lead to desirable image effects.

For instance, increasing the background illumination while dimming the illumination of the object may temporarily hide the object. On the other hand, dimming the background illumination while setting the object illumination to a high level, the background may be hidden and/or the object may be put into focus. Additionally or alternatively the background light source may control the characteristics of the background, such as color and/or patterns, or other properties of the background.

The apparatus according to the first exemplary aspect may be configured to control at least one parameter of at least one adjustable light source, in particular an object light sources and/or a background light source, to achieve the described illumination patterns.

According to an embodiment of all exemplary aspects, the parameter controlled by the apparatus of at least one of the at least one adjustable light source is at least one of a brightness, a light color, an illumination direction, a degree of diffusion, an illumination angle (i.e. the angle at which the cone of light opens), or combinations thereof.

According to an embodiment of all exemplary aspects, the at least one light source causes a combined overall illumination. The combined overall illumination depends on at least one parameter of the at least one adjustable light source. The combined overall illumination can in particular be a result of an overlap of the illuminated volumes of the respective adjustable light sources. The combined overall illumination is not dependent on an overlap of the illuminated volumes, however. For instance, the first adjustable light source may illuminate a first part of the object and a second adjustable light source may illuminate a second part of the object, wherein the first part and the second part and/or the illuminated volumes of the first and the second light source essentially do not overlap. If a background light source is provided, the combined overall illumination will include the illumination caused by the background light source.

The apparatus according to the first exemplary aspect may control the combined overall illumination through controlling the at least one parameter of the at least one of the at least one adjustable light source.

The combined overall illumination may be controlled to illuminate at least one part of the object. The combined overall illumination may in particular highlight certain parts of the object through illumination, for instance through an increased illumination intensity or a particularly chosen light color. Highlighted parts may be illuminated more strongly by the overall combined illumination than the average of the remaining parts of the object, stronger than at least one part of the object and in particular stronger than all of the other parts of the object. The illuminated parts of the object may be emphasized in the captured image. The combined overall illumination may as well dim certain parts of the object. Dimming may in this case mean that the illumination of the dimmed part is less strong than the illumination of at least one other and in particular all other parts of the object or less strong than the average illumination of the object.

As described above, in example, the object is the head of the user. The overall combined illumination may be controlled in a way to illuminate certain facial regions more strongly than others. The more strongly illuminated facial regions may for instance at least comprise one of the face in general, one or both eyes, the mouth, the nose, the cheeks, the forehead, the head hair, or combinations thereof. The overall combined illumination may be configured to dim certain parts of the users head such as for instance at least one of one or both ears, the chin, the neck, or combinations thereof.

The overall combined illumination may further highlight or dim at least part of the background, in particular by means of the background light source. The background may also be highlighted by utilizing the already existing difference in illumination between the object and the background. E.g., for an already overexposed background, directing no specific light onto the background results in highlighting the background. On the other hand, in an already underexposed background situation, directing no specific illumination towards the background results in dimming the background. The same principle may be used in guiding the overall combined illumination of the object, in particular of the head of a user.

The overall combined illumination may therefore as well be understood as the combination of the illumination caused by the adjustable light sources as well as the illumination that is already present in the scene. This illumination already present in the scene may be caused by lighting installed in the environment or for instance by natural light of the sun entering the scene.

The apparatus according to the first exemplary aspect can generate an overall combined illumination by controlling at least one parameter of at least one of the at least one adjustable light sources.

For example, it may adjust the direction of illumination towards the object or towards a part of the object. It may increase or decrease the intensity of illumination of an adjustable light source which is directed towards a given part of the object. It may adjust the color of at least one light source.

In an example, the apparatus according to the first exemplary aspect may comprise one adjustable light source. When the tracking information received by the apparatus indicates that the object is approximately in the center of the field-of-view and/or within the volume of illumination (i.e. light cone) of the adjustable light source, the adjustable light source may be controlled to emit light in order to illuminate the object. When the tracking information indicates that the object is not within the center of the field-of-view and/or within the center of the light cone of the adjustable light source, the apparatus may control the brightness parameter of the adjustable light source to decrease the brightness and thus avoid illuminating an area of the image where the object is currently not located. Brightness and/or intensity is only an exemplary parameter and may in this example be replaced by any other parameter of the adjustable light source.

In another exemplary approach, the apparatus according to the first exemplary aspect may comprise at least a first adjustable light source, in particular on a first edge of the apparatus, and a second adjustable light source, in particular on a second edge of the apparatus, in particular a second edge opposite to the first edge. The object may be the head of the user. When the tracking information received by the apparatus indicates that the user is facing towards the first adjustable light source, the apparatus may control the brightness parameter of the first adjustable light source to increase the brightness. The apparatus may additionally or alternatively control the brightness parameter of the second adjustable light source in order to dim the second light source in this case (user facing first light source). As a consequence, the overall combined illumination approximates a light source directed onto the face of the user. Additionally, an unwanted illumination of the ear of the user can be avoided. If the tracking information indicates that the user approximately faces both adjustable light sources equally and/or faces a camera which may in particular be positioned between the adjustable light sources, the brightness of the two adjustable light sources may be set to approximately the same value. The first and the second edge of the apparatus may for instance be the left and the right edge for a given orientation of the apparatus. The first and the second edge of the apparatus may as well for instance been in the upper and the lower edge for a given orientation. Brightness and/or intensity is only an exemplary parameter and may in this example be replaced by any other parameter of the adjustable light source.

The orientation of the user's head may in this case be indicative of the gaze of the user.

Of course, more than two adjustable light sources may be controlled by the apparatus. The above concepts of adjusting the overall combined nation caused by a plurality of light sources independence of tracking information received by the apparatus, indicative of object orientation, position and/or distance can be applied directly to multiple light sources.

According to an embodiment of all exemplary aspects, an adjusted difference in brightness between two adjustable light sources is controlled to be monotonically rising with a deviation of an orientation of the object with respect to a normal orientation. The normal orientation may for instance in the case of a head of a user be the orientation of the user's head when they gaze centrally onto a camera and/or onto the center of a display of the apparatus. If the user's head is in the normal orientation, the two light sources may for instance be set to an equal brightness. The difference in brightness in this case is thus approximately equal to zero. When the head of the user leaves the normal orientation and is facing a first of the light sources more than the second of the light sources, the brightness of the light sources may be set such that the first of the light sources is brighter than the second of the light sources. This may be achieved by increasing the brightness of the first light source and/or decreasing the brightness of the second light source. The difference in brightness may be caused by one light source being set to a higher brightness and/or another light source being set to a lower brightness. The difference in brightness may be set in a way that is monotonically, for instance linearly, rising with an orientation deviation from the normal orientation. At a predefined threshold deviation, for instance 10°, 20°, 30°, 40°, 50°, 60°, 70°, 80° or 90°, only one light source may emit light while the other one is essentially switched off. Between no deviation (e.g. essentially 0°) and the pre-defined threshold deviation, the difference in brightness may linearly increase with increasing deviation.

According to an embodiment of all exemplary aspects, a parameter of at least one of the at least one adjustable light source, in particular the brightness, may be set depending on the distance of the object indicated by the received tracking information. In particular the brightness may be increased with increasing distance. The distance may be the distance between the object and the apparatus.

When controlling one parameter of the at least one adjustable light source depending on a position and/or an orientation of the object indicated by the received tracking information, the magnitude of the adjustment caused by the control may be dependent on the distance indicated by the tracking information. In particular, the magnitude of the adjustment may be monotonically rising with increasing distance. In other words, the magnitude of the adjustment of a parameter depending on the indicated orientation and/or position of the object may be made the stronger, the farther away the object is from the apparatus according to the first exemplary aspect and/or at least one of the at least one camera. In other words, the magnitude of the adjustment of a parameter depending on the indicated orientation and/or position of the object may be positively correlated with the distance of the object from the apparatus according to the first exemplary aspect and/or at least one of the at least one camera. In particular, the magnitude of an adjusted brightness difference between two adjustable light sources may be chosen (i.e. controlled by the apparatus) to be higher for a greater distance of the object to the apparatus.

According to an embodiment of all exemplary aspects, the apparatus may thus adjust the illumination difference between the background and the object.

Adjusting the illumination difference between the background and the object may be achieved, inter alia, by strengthening or at least not counteracting existing differences in illumination.

According to an embodiment of all exemplary aspects, the combined overall illumination strengthens an illumination difference between the object and the background if the tracking information indicates an orientation of the object outside a predefined range of orientations.

In particular, the combined overall illumination may illuminate, in particular highlight, at least a part of the background and may spare at least a part of the object in this case. The object is hidden by under exposure. Alternatively, the combined overall illumination may spare at least a part or most of the background and may illuminate, in particular highlight, at least a part of the object in this case. The object may become over-exposed in this case.

In other words, the illumination difference between the background and the object is increased in such a way that the background becomes brighter and/or the object becomes more dimmed or the other way round.

When the combined overall illumination spares a part of the image seen, for instance the object, this denotes in general that the at least one adjustable light source is configured to not increase the already present illumination of the spared part of the scene. Sparing may in certain instances comprise the illumination of areas that are not spared. In this way, as the overall brightness may be adjusted by the exposure time of the camera, increasing the termination of other areas of the image, except for the spared region, the imaged brightness of the spared area is reduced.

A range of predefined orientations may for instance comprise range of orientations in which the object is supposed to be imaged. For example, when the object is the head of the user, the range of predefined orientations may comprise a neutral orientation, in which the user faces at least one of the at least one camera and/or the apparatus according to the first exemplary aspect and/or at least one display directly. Based on the neutral orientation, a range of predefined orientations may be obtained by allowing a deviation from the neutral orientation. For example, the range of predefined orientations may comprise the neutral orientation +/- a threshold of 5°, 10°, 15°, 20°, 25°, 30°, 35°, 40°, 45°, 50°, 60°, 70°, 80° or 90° in any axis. I.e., it does not matter in this case, whether the head orientation of the user is deviated from neutral orientation towards the right or the left (horizontally) or whether the deviation occurs upwards or downwards (vertically).

In another example, the range of predefined orientations may differentiate between a first horizontal deviation of the orientation and a second vertical deviation. For instance, the threshold for the first deviation may be lower or higher than the threshold for the second deviation, in particular by a factor of at least 1.5, 2, 2.5, 3, 3.5, or more.

In a further example, the predefined orientations may comprise any possible vertical orientation deviation from the neutral orientation while imposing a threshold of 5°, 10°, 15°, 20°, 25°, 30°, 35°, 40°, 45°, 50°, 60°, 70°, 80° or 90° on the horizontal orientation deviation. In another example, the previous example is inverted and no limitation is imposed on the horizontal orientation deviation, whereas one of the thresholds of 5°, 10°, 15°, 20°, 25°, 30°, 35°, 40°, 45°, 50°, 60°, 70°, 80° or 90° is set for the vertical deviation. The orientation may in this case as well be synonymous to the gaze of the user.

In other words, in particular if the tracking information indicates that the head of the user is oriented away from the apparatus according to the first exemplary aspect, i.e. if the gaze of the user is not directed onto the apparatus or if an angle between the optical axis of the field-of-view of the at least one of the at least one camera and the estimated gaze is larger than the threshold as the ones given above, the combined overall illumination illuminates and/or highlights at least a part of the background and spares at least a part of the object.

To this end, in particular at least one parameter of at least one background light source may be controlled in order to illuminate the background. For example the brightness of the background light source may be increased. In particular, at least one of the at least one adjustable light source may become a background light source through the orientation, position and/or distance of the object.

When the user faces away from the apparatus according to the first exemplary aspect, they may be determined to be distracted. On the other hand, if the user faces the apparatus, they may be determined to be focused. A state of the user (focused or distracted) may thus be determined by the apparatus and the illumination may be controlled based on the state.

The technical effect of configuring the apparatus according to the first exemplary aspect in a way as described above may enable a privacy feature. The privacy feature may in particular be useful in the context of using the apparatus for a video call. If the user does not face the apparatus, in particular does not face at least one of the at least one camera and/or at least one of the at least one display, they may no longer desire to be monitored by the at least one camera in an unchanged way. On the contrary, they may take part in a conversation outside the interaction with the apparatus, and desire to be basically invisible. In comparison to switching off of the camera, merely altering the illumination enables the at least one camera to still capture a "shadow" of the user. In particular in the situation of a video call in which the user participates in through the device, this still provides some insights to the other participants as to whether the user has left permanently or will soon be joining again.

In an example, the user may be muted automatically when they are not facing the apparatus according to the first exemplary aspect in at least one of the allowed bounds as defined above.

According to an embodiment of all exemplary aspects, the combined overall illumination is configured to counteract an illumination difference between the object and the background.

An illumination difference between two imaged areas may be defined as the difference between the average, median, maximum, minimum and/or weighted average illumination intensity in the two respective imaged areas. The illumination may in this case comprise both the already existing illumination in the scene and in some cases as well as the illumination caused by the at least one adjustable light source. The first area may here be the object, i.e. the image area occupied by the object. The second area may here be in the background, i.e. the image area occupied by the background, i.e. the area not occupied by the object.

Counteracting illumination differences of two areas, such as the object and the background, means to reduce the illumination difference between the two areas. Counteracting illumination differences may in particular be achieved by illuminating and underexposed imaged area (i.e. the area which is less illuminated than the respective other area) and/or reducing the illumination in an overexposed area and/or sparing the overexposed area (i.e. the area which is illuminated more strongly than the respective other area) by selectively illuminating the imaged scene.

Typical situations in which illumination differences arise, are particularly bright backgrounds, such as an object positioned inside a room in front of a window towards the outside. Here, the background may be brighter than the object. In the inverse case, the object may be imaged in a very dark environment, where for instance a display and/or at least one of the adjustable light sources of the apparatus may serve as a main source for illumination. In this case, the object is much brighter than the background.

Such a basic difference between background illumination and object illumination may be counteracted by illuminating the region which is underexposed and/or sparing the region which is overexposed.

It is to be understood that the presentation in this section is merely by way of examples and non-limiting.

Other features will become apparent from the following detailed description considered in conjunction with the accompanying drawings. It is to be understood, however, that the drawings are designed solely for purposes of illustration and not as a definition of the limits, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of system according to all exemplary aspects;
- Fig. 2a-c: schematic illustrations of an apparatus according to the first exemplary aspect;
- Fig. 3: an example embodiment in a schematic illustration of all exemplary aspects;
- Fig. 4a-c: another example embodiment in a schematic illustration of all exemplary aspects;
- Fig. 5: example embodiments of a schematic illustration how a lighting of an object may be performed all exemplary aspects;
- Fig. 6: another example embodiment of in a schematic illustration according to all exemplary aspects;
- Fig. 7a,b: a schematic illustration of an example embodiment in which an illumination difference between an object and the background of the object is purposefully manipulated according to all exemplary aspects;
- Fig. 8a,b: a schematic illustration of an orientation within a certain range of an object to be illuminated as utilized by all exemplary aspects;
- Fig. 9: a schematic block diagram of an apparatus according to the first exemplary aspect;
- Fig. 10: examples of storage media; and
- Fig. 11: a flow chart of steps executed by a method according to the second exemplary aspect.

### DETAILED DESCRIPTION OF THE DRAWINGS

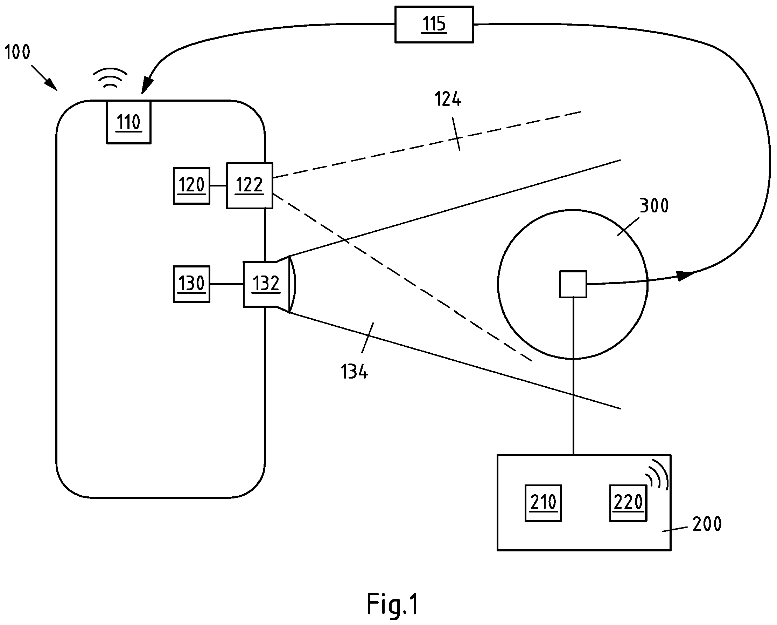

Figure 1 shows an exemplary embodiment of an apparatus 100 and a system comprising an apparatus 100 and a tracking device 200, as well as an object 300.

The apparatus 100 comprises means 110, 120, 130 for realizing different functionalities of the apparatus 100. The apparatus comprises receiving means 110, which are arranged to receive tracking information 115. The tracking information may be indicative of at least one of an orientation, a position or a distance of the object 300. The tracking information may in particular have been determined by a tracking device 200. The tracking device may be in mechanical contact with the object 300, for instance. The tracking device may comprise at least one sensor 210. The tracking device 200 may further comprise at least one communication means 220. The communication means 220 may be configured to communicate with the apparatus 100, in particular in order to transmit the tracking information 115, via a communication link, in particular to the apparatus 100. The communication link may in particular be a wireless communication link and/or a wired communication link.

The apparatus 100 further comprises at least one adjustable light source 122. The apparatus further comprises means 120 for controlling the at least one adjustable light source 122. The means 120 for controlling the at least one adjustable light source 122 may be connected to the adjustable light source 122. The light source 122 emits light in an illuminated volume 124. The illuminated volume 124 may as well be described as a cone of light 124.

The apparatus 100 further comprises at least one camera 132. Also, the apparatus comprises means 130 for capturing an image by means of the at least one camera 132. The means 130 for capturing an image may be connected to the at least one camera 132. The camera 132 has a field-of-view 134 in which it captures an image of its environment. The object 300 may be placed at least partially within the field-of-view 134 or close to it. The cone of light 124 may be configured to illuminate at least a part of the field-of-view 134. The cone of light 124 (i.e. illuminating volume 124) may thus intersect with the field-of-view 134 of the at least one camera 132.

The apparatus 100 may thus be configured to receive tracking information 115, control at least one parameter of the at least one adjustable light source 122 by the means 120 and capture an image using the camera 132 by means 130.

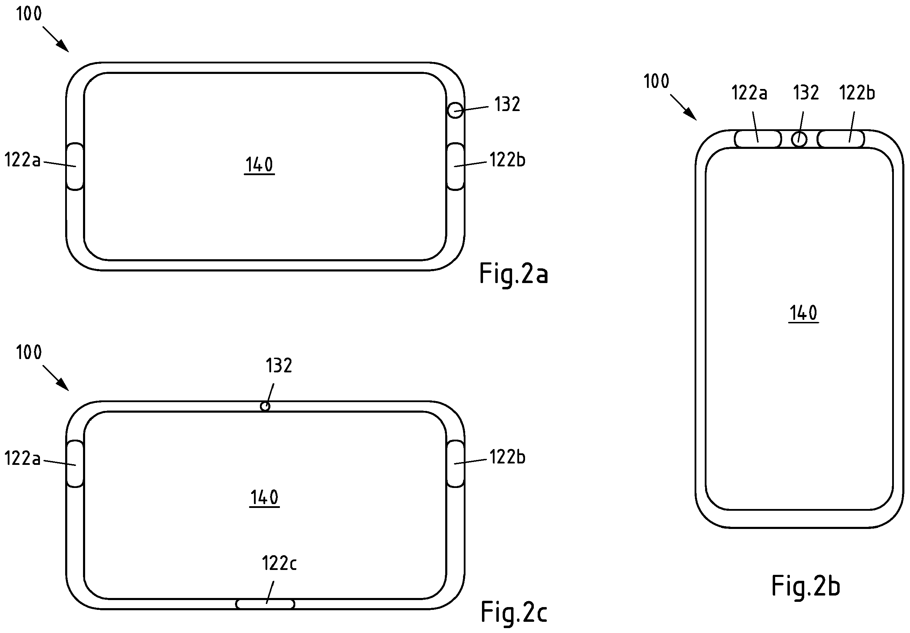

Figures 2a-c show a respective number of exemplary embodiments of apparatus 100, which may be e.g. apparatus 100 of the system of Fig. 1.

In all shown cases of Figures 2a-c, the apparatus 100 is a user device 100. The shown apparatus 100 may for instance be a mobile phone, a tablet or the like. In the shown variants, the apparatus 100 comprises at least two adjustable light sources 122. Nonetheless, apparatus 100 may also (e.g. only) comprise one adjustable light source 122. The shown apparatus 100 further comprise a display 140. Additionally, a camera 132 is provided on the shown face of the apparatus 100. The display 140, the camera 132 and the adjustable light sources 122a, b essentially point in the same direction. The shown face of the apparatus 100 in Figures 2a-c may be considered as the front face of the respective apparatus 100 in the shown embodiment.

Figure 2a now shows a configuration of an apparatus 100 where the shown adjustable light sources 122a and 122b are arranged adjacent to opposite short edges of the (e.g. essentially) rectangularly shaped front face of the apparatus 100. This has the effect of achieving a particularly large distance between the adjustable light sources 122a, 122b and thus a strong basis for manipulating the overall combined illumination caused by the two adjustable light sources 122a, 122b.

In figure 2b, the two adjustable light sources 122a, 122b are positioned on the same short edge of the apparatus 100. On the same short edge, the camera 132 is arranged as well. The camera 132 is arranged between the adjustable light sources 122a, 122b, in particular centrally between the two adjustable light sources 122a, 122b.

Figure 2c then shows an embodiment in which three adjustable light sources 122a, 122b, 122c are arranged at the edges of the face of the apparatus 100. The camera 132 is positioned on the long side edge of the face between the light sources 122a, 122b. The camera 132 is positioned (e.g. essentially) in the center of the long edge. The light source 122c is also positioned on a respective long edge opposite to the long edge, on which the camera 132 is arranged. The adjustable light source 122c is also (e.g. essentially) centrally placed on its respective long edge.

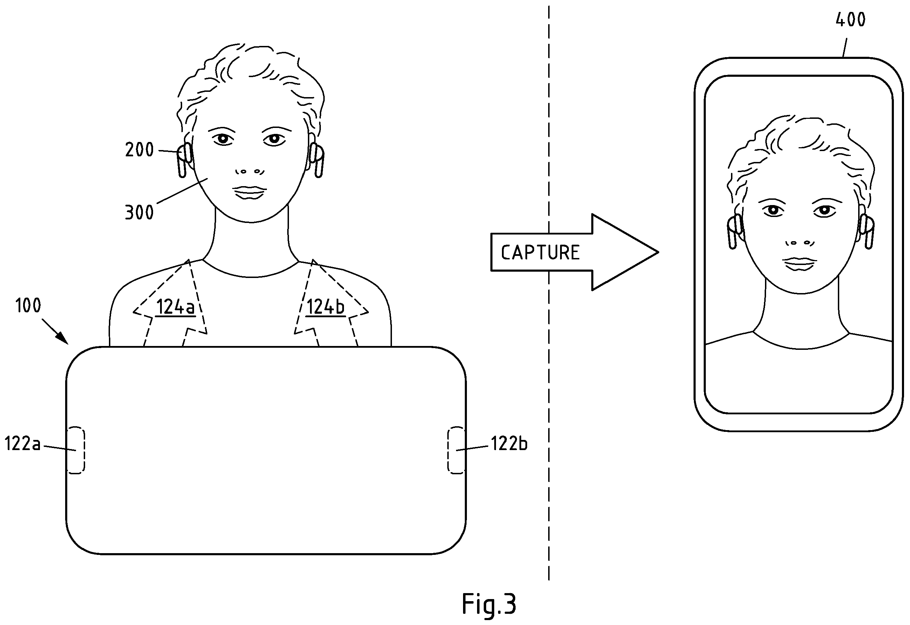

Figure 3 shows the scenario, in which the object 300 is the head of the illustrated user. The tracking device 200 is formed as a head tracking device 200, in particular as earbuds 200. The apparatus 100 comprises two adjustable light sources 122a, 122b which emit respective cones of light 124a, 124b. The head of the user 300 is illuminated by the adjustable light sources 122a, 122b, despite the low overall lighting of the room. When an image is now captured of the object 300, the relevant parts, i.e. the object 300, i.e. the head of the user 300, is illuminated and therefore captured well by the camera. The image quality is high due to the illumination caused by the adjustable light sources 122a, 122b.

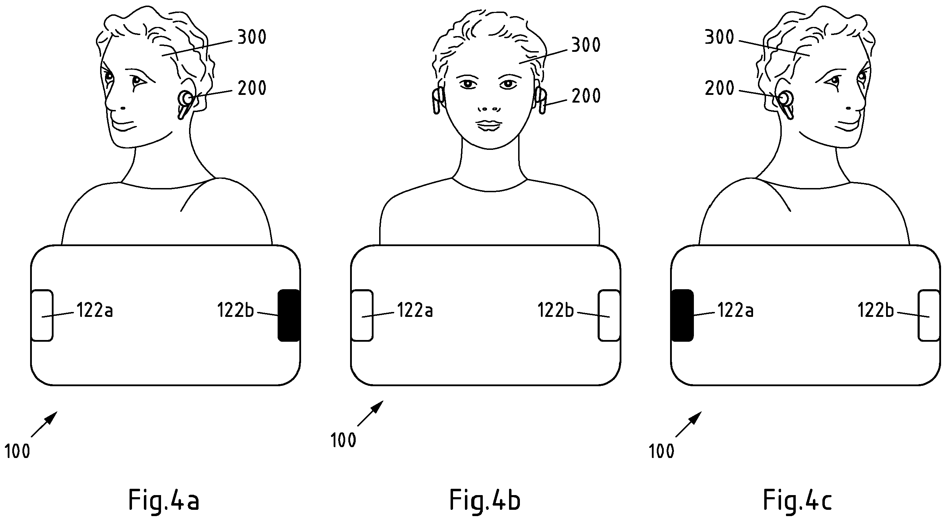

Figures 4a-c show an embodiment of all exemplary aspects of the subject matter. In particular, an orientation-dependent illumination of the object 300 is shown. The object 300 again is the head of the user. In figure 4a, the head of the user 300 is oriented to the left. Accordingly, the light source 122a on the left is controlled to emit light and illuminates the face of the user. The adjustable light source 122b on the right is dimmed, in particular switched off. Thereby, the part of the head to the right, i.e. the ear and parts of the neck, are not illuminated and therefore not put into the focus of an image that may be captured of the illuminated head 300. The adjustable light sources 122a, 122b of the apparatus 100 are controlled based on the orientation of the object 300. The orientation is indicated by received tracking information (not shown).

In an alternative orientation of the head 300, shown in figure 4b, the user is directly facing the apparatus 100. In this scenario, both adjustable light sources 122a, 122b may be switched on. The two adjustable light sources 122a, 122b may emit light at the same or equal brightness. Thereby, the face of the user is uniformly illuminated. As the light comes from two opposing directions, the potential shadow caused by protrusions such as the nose is avoided.

Figure 4c shows a similar arrangement as figure 4a with the only difference, that the head 300 is now oriented to the right. Therefore, the right adjustable light source 122b is switched on, while the left adjustable light source 122a is dimmed or switched off.

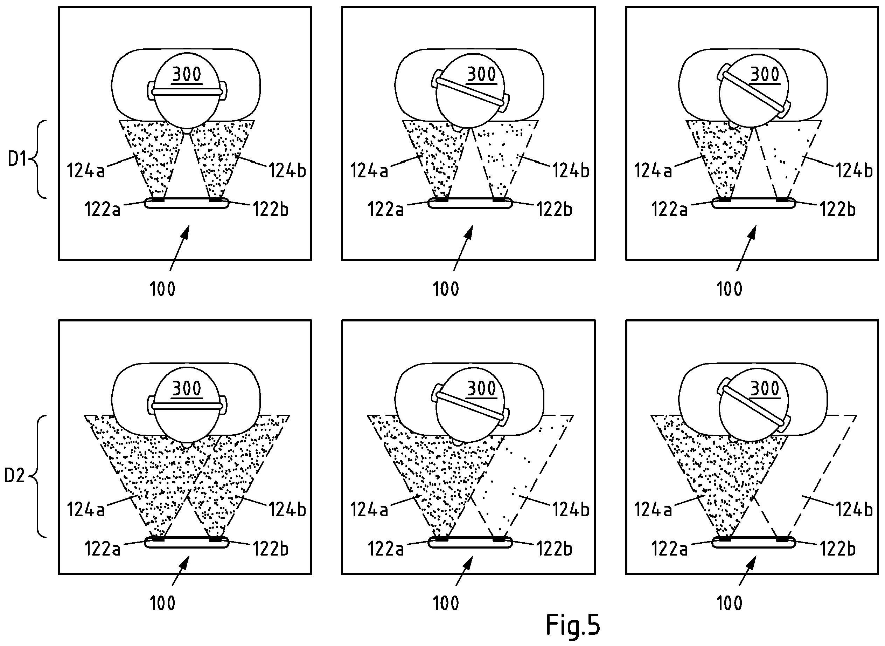

Figure 5 shows an embodiment of all exemplary aspects of controlling the adjustable light sources 122 in six different settings. In this example, the control of the light sources 122a, 122b is made dependent on the distance of the object 300 to the apparatus 100. In the shown six different settings, the distance between the object 300 and the apparatus 100 varies between the three settings in the top row of figure 5 having distance D1, and the three settings shown in the bottom row having distance D2. It is recognized that both cones of light 124a, 124b open with increasing distance to the light source itself while the distance between the light sources 122a,b is constant. Therefore, the variation of a difference in brightness between two adjustable light sources 122a, 122b causes particularly strong change in illumination of the object 300 with the distance between the light sources and the object 300 being small. For larger distances between the object 300 and light sources 122a, 122b, the effects of varying the difference in brightness between the two light sources 122a, 122b on the illumination of the object 300 is decreased.

To accommodate for this effect, the magnitude of the difference in brightness between the first adjustable light source 122a and a second adjustable light source 122b for a given orientation of the object 300 may be lower for the first distance D1 than for the second distance D2, with D1 being shorter than D2.

Additionally, the magnitude of the difference in brightness between the first adjustable light source 122a and a second adjustable light source 122b may depend on the orientation of the object in relation to the apparatus 100. In particular, a strong deviation from a fully central orientation, as shown in the right column of schematic diagrams of figure 5, may cause the apparatus to set a stronger brightness difference between the light sources 122a, 122b than for an intermediate deviation shown in the central column of figure 5.

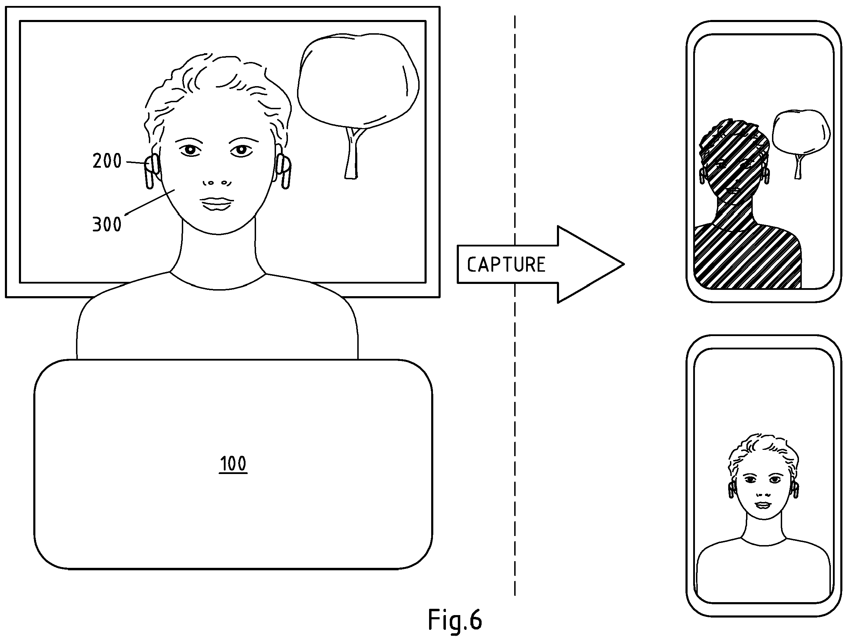

Figure 6 demonstrates a situation for image capture in which the object 300, here head of a user 300, is in an indoors environment which is in particular moderately lit while in the background, a window is arranged, through which a strong brightness of a sunny day enters. If a common apparatus without adjustable light source 122 captures the given scene, either an underexposure of the object 300 would result (see upper right part of figure 6) or a alternatively, a fully overexposed background will result with an at the same time sufficiently illuminated object (see lower right part of figure 6 in which the tree is not visible anymore due to over-exposure).

With such at least one adjustable light source, the apparatus 100 is able to selectively illuminate the object 300 and therefore avoid strong differences between the background of the object 300 and the object 300 itself.

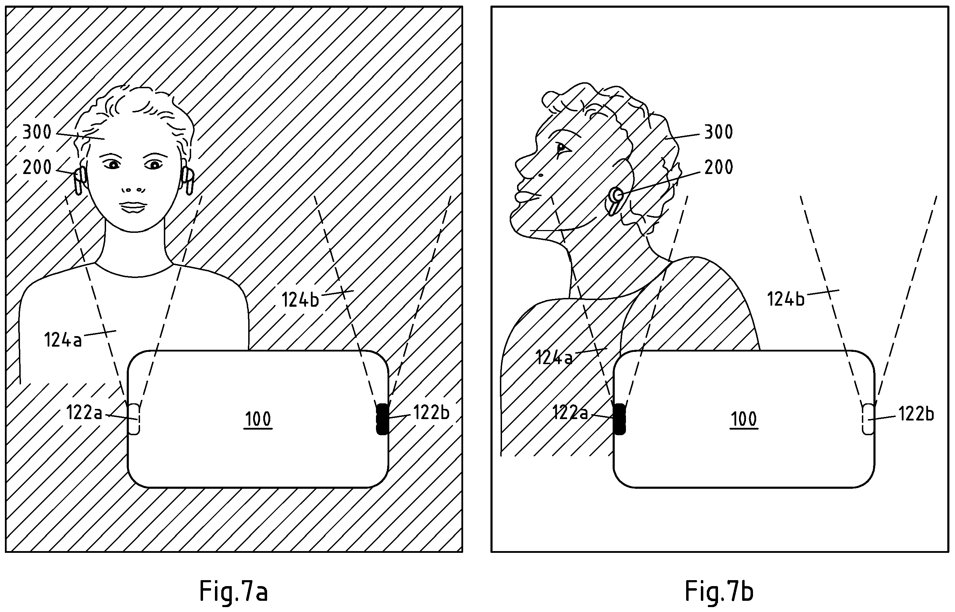

Figures 7a,b show a respective mode of operation according to an embodiment of all exemplary aspects, in which the illumination difference between the object 300 and the background of the object 300 is purposefully manipulated. In figure 7a, the user is captured by the apparatus 100 while being lighted by one 122a of the adjustable light sources 122a, 122b.

Due to the position of the object 300 with respect to the apparatus 100, one of the adjustable light sources, namely 122b, does not catch the object 300 with its cone of light 124b. This adjustable light source 122b may thus be considered a background light source 122b. The adjustable light source 122a may be considered an object light source, which illuminates the object 300.

In the first scenario in figure 7a, the user 300 faces the apparatus 100. Therefore, the adjustable light source 122a (object light source) is switched on and illuminates the object 300. The background light source 122b is switched off.

In the scenario in figure 7b, the head of the user 300 faces away from the apparatus 100. The device may then control the adjustable light sources 122a, 122b in such a way that the object light source 122a is switched off or dimmed and does not illuminate the object 300 anymore. The background light source 122b, on the other hand, is switched on by the apparatus to light the background.

In figure 7a, the object 300 is brighter than the background. In figure 7b, the background is brighter than the object 300. This difference is emphasized by the limited dynamic range of the camera. As a result, the head of the user 300 is reduced to a shadow in the configuration of figure 7b.

Making this illumination configuration dependent on the user facing away from the device 100, enables a privacy functionality, in which the user is switched to almost invisible when they are facing away from the apparatus 100.

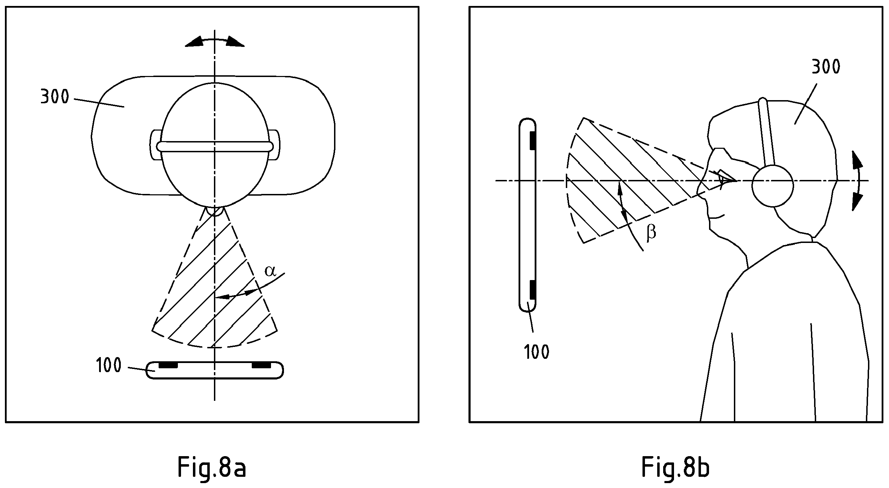

Figures 8a,b illustrate a range of predefined orientations of an object 300. If the orientation of the object is within a range as shown in figures 8a,b, the lighting may be configured as illustrated in figure 7a. That is, the object 300 is lighted and the background of the object 300 is not lighted. If however the orientation of the object 300 exits the range of predefined orientations, the illumination configuration shown in figure 7b may be set, i.e. the object 300 is not lighted whereas the background may be lighted.

The range of predefined orientations may be defined in a horizontal plane as shown in figure 8a. Here, the allowed deviation from a normal orientation may be limited by an angle *α*. The range of predefined orientations may be defined in a vertical plane as shown in figure 8b. Here, the allowed deviation from a normal orientation may be limited by an angle *β*. The angle *α* and the angle *β* may be different from each other. In particular, the angle *α* may be larger than the angle *β* or alternatively, the angle *α* may be smaller than the angle *β*. This allows a differentiation of the sensitivity of the activation of the privacy function as shown in figure 7a,b depending on the plane in which the object is turned, i.e. in which the user tilts their head.

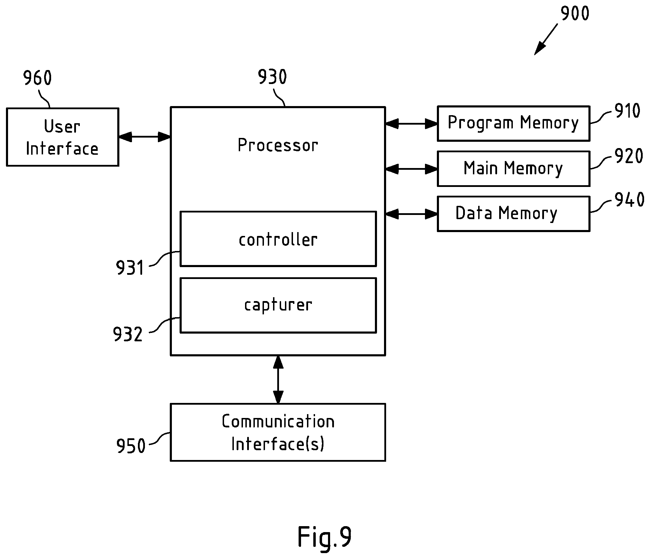

Fig. 9 is a schematic block diagram of an apparatus 900 according to the first exemplary aspect, which may for instance represent an electronic device (e.g. a user equipment), in particular a mobile phone, a tablet, PDA, or a combination thereof, to name but a few non-limiting examples. Apparatus 900 in particular corresponds to the apparatus 900 of the first exemplary aspect, an apparatus 900 controlling and/or executing the steps of the second exemplary, and apparatus 900 comprising a processor executing the computer program code according to the third aspect, and/or the apparatus 900 being part of the system according to the fourth exemplary aspect.

Apparatus 900 comprises a processor 930, working memory 920, program memory 910, data memory 940, communication interface(s) 950, an optional user interface 960 and optionally other components.

Apparatus 900 may for instance be configured to perform and/or control or comprise respective means (at least one of 910 to 960) for performing and/or controlling the method according to the second exemplary aspect. Apparatus 900 may as well constitute an apparatus comprising at least one processor (930) and at least one memory (910) including computer program code, the at least one memory and the computer program code configured to, with the at least one processor, cause an apparatus, e.g. apparatus 900 at least to perform and/or control the method according to the second exemplary aspects.

Processor 930 may for instance further control the memories 910, 920, 940, the communication interface(s) 950, the optional user interface 960 and/or other components.

The processor 930 may for example comprise a controller 931 which is arranged to control at least one parameter of at least one of the at least one adjustable light source 122. The controller may in particular integrate knowledge about received tracking information 115 and select an appropriate adjustment of at least one of the parameters of the at least one adjustable light source 122.

The processor 930 may for example comprise a capturer 932, which is arranged to capture at least one image by means of at least one of the at least one camera 132.

The processor 930 may for instance execute computer program code stored in program memory 910 (for instance according to the third exemplary aspect), which may for instance represent a computer readable storage medium comprising program code that, when executed by processor 930, causes the processor 930 to perform the method according to the second exemplary aspects.

Processor 930 (and in addition or in the alternative any other processor mentioned in this specification) may be a processor of any suitable type. Processor 930 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 310 may for instance be an application processor that runs an operating system.

Program memory 910 may in addition or in the alternative be included into processor 930. This memory may for instance be fixedly connected to processor 930, or be at least partially removable from processor 930, for instance in the form of a memory card or stick. Program memory 910 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 910 may comprise an operating system for processor 930. Program memory 910 may comprise a firmware for apparatus 900.

Apparatus 900 comprises a working memory 920, for instance in the form of a volatile memory. It may for instance be a Random Access Memory (RAM) or Dynamic RAM (DRAM), to give but a few non-limiting examples. It may for instance be used by processor 930 when executing an operating system and/or computer program.

Data memory 940 may for instance be a non-volatile memory. It may for instance be a FLASH memory (or a part thereof), any of a ROM, PROM, EPROM and EEPROM memory (or a part thereof) or a hard disc (or a part thereof), to name but a few examples.

Communication interface(s) 950 enable apparatus 900 to communicate with other entities. The communication interface(s) 950 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 900 to communicate with other entities. Examples of communication interface(s) 950 are cable-bound communication means, radio communication means comprising, for example, at least one antenna, and/or different communication means. In particular the communication mean(s) 950 may be suitable to establish a communication link to a tracking device 200 and/or to other devices, in particular for videoconferencing. The apparatus may for instance obtain tracking information 115 via the communication interface 115 from the tracking device 200.

User interface 960 is optional and may comprise a display for displaying information to a user and/or an input device (e.g. a keyboard, keypad, touchpad, mouse, or a combination thereof, to name but a few non-limiting examples.) for receiving information from a user. The user interface 960 may in particular comprise a display 140 suitable to present at least an image and/or video, in particular the live video stream to a user of the apparatus 900.

Some or all of the components of the apparatus 900 may for instance be connected via a bus. Some or all of the components of the apparatus 900 may for instance be combined into one or more modules.

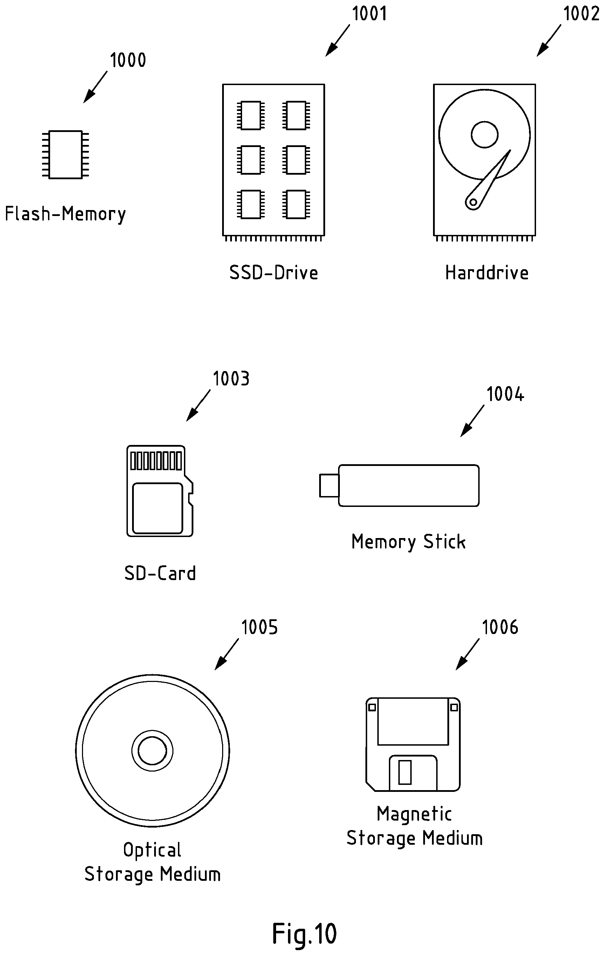

Fig. 10 is a schematic illustration of examples of tangible and non-transitory computer-readable storage media according to the present invention that may for instance be used to implement memory 910, memory 920 and/or memory 940 of apparatus 900 of Fig. 9. To this end, Fig. 10 displays a flash memory 1000, which may for instance be soldered or bonded to a printed circuit board, a solid-state drive 1001 comprising a plurality of memory chips (e.g. Flash memory chips), a magnetic hard drive 1002, a Secure Digital (SD) card 1003, a Universal Serial Bus (USB) memory stick 1004, an optical storage medium 1005 (such as for instance a CD-ROM or DVD) and a magnetic storage medium 1006.

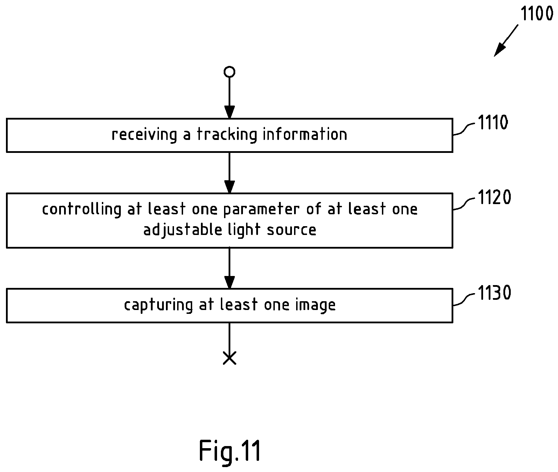

Fig. 11 shows a flowchart of a method 1100 according to the second exemplary aspect that may be performed and/or controlled by an apparatus, in particular an apparatus according to the first exemplary aspect (e.g. apparatus 100 of Fig. 1) and/or by an apparatus executing a program according to the third exemplary aspect and/or by a system, in particular a system according to the fourth exemplary aspect.

The method comprises the step 1110 of receiving a tracking information. The tracking information may in particular be received as data, in particular as digitally encoded data. The tracking information may be indicative of at least one of an orientation, a location or a distance, for instance relative to e.g., a field-of-view of a camera and/or absolute, of an object positioned inside or close to a field-of-view of at least one camera. The tracking information may be received from a head tracking device, e.g. head tracking device 200 of Fig. 1.

The method further comprises the step 1120 of controlling at least one parameter of at least one adjustable light source arranged to illuminate at least a part of the field-of-view of the at least one of the at least one camera based, at least in part, on the tracking information.

The method further comprises the step 1130 of capturing at least one image, in particular of the object, by means of at least one of the at least one camera.

The steps 1110, 1120, 1130 may be executed in the shown order (1110, then 1120, then 1130). Alternatively, the steps may be performed in any permutation, in particular 1110, 1130, 1120 or 1120, 1110, 1130 or 1120, 1130, 1110 or 1130, 1110, 1120 or 1130, 1120, 1110, in sequence or in parallel.

Finally, the following embodiments should also be considered to be disclosed:
Embodiment 1:
   A method comprising
   - receiving a tracking information indicative of at least one of an orientation, a location or a distance of an object positioned inside or close to a field-of-view of at least one camera,
   - controlling at least one parameter of at least one adjustable light source arranged to illuminate at least a part of the field-of-view of the at least one camera based, at least in part, on the tracking information,
   - capturing at least one image by means of at least one of the at least one camera.
Embodiment 2:
   The method according to embodiment 1, wherein
   - the object is a head of a user.
Embodiment 3:
   The method according to any of the embodiments 1 or 2, wherein
   - the tracking information is obtained by a tracking device, in particular by a head-tracking device, in particular a head-tracking headphones and/or a head-tracking earbuds.
Embodiment 4:
   The method according to any of the embodiments 1 to 3, wherein
   - the parameter is at least any of a brightness, a light color, an illumination direction, a degree of diffusion, an illumination angle.
Embodiment 5:
   The method according to any of the embodiments 1 to 4, wherein
   - the at least one of the at least one adjustable light source is configured to illuminate at least part of a background.
Embodiment 6:
   The method according to any of the embodiments 1 to 5, wherein
   - the at least one light source causes a combined overall illumination depending on at least one parameter of the at least one adjustable light source, wherein the combined overall illumination illuminates at least one part of the object or at least part of the background.
Embodiment 7:
   The method according to any of the embodiments 1 to 6, wherein
   - the combined overall illumination illuminates at least a part of the background and spares at least a part of the object, if the tracking information indicates an orientation of the object outside a predefined range of orientations,.
Embodiment 8:
   The method according to any of the embodiments 1 to 7, wherein
   - the combined overall illumination is configured to counteract an illumination difference between the object and the background.
Embodiment 9:
   An apparatus configured to perform and/or control or comprising respective means for performing and/or controlling the method of any of the embodiments 1 to 8.
Embodiment 10:
   The apparatus according to embodiment 9, wherein
   - the apparatus comprises at least one of the at least one camera.
Embodiment 11:
   The apparatus according to any embodiments 8 or 10, wherein
   - the apparatus comprises at least one adjustable light source.
Embodiment 12:
   The apparatus according to any embodiments 8 to 11, wherein
   the object is a head of a user.
Embodiment 13:
   The apparatus according to any of embodiments 8 to 12, wherein
   - the means for receiving the tracking information are configured to receive the tracking information from a tracking device, in particular a head-tracking device, in particular a head-tracking headphones and/or a head-tracking earbuds.
Embodiment 14:
   The apparatus according to any of embodiments 8 to 13, wherein
   - the apparatus is a user device.
Embodiment 15:
   The apparatus according to any of embodiments 8 to 14, wherein
   - at least one of the at least one camera or the at least one adjustable light source is located on a first face of the apparatus
Embodiment 16:
   The apparatus according to any of embodiments 8 to 15, wherein
   - the at least one of the at least one adjustable light source is configured to illuminate at least part of a background.
Embodiment 17:
   The apparatus according to any of the embodiments 8 to 16, wherein
   - the parameter is at least one of a brightness, a light color, an illumination direction, a degree of diffusion or an illumination angle.
Embodiment 18:
   The apparatus according to any of the embodiments 8 to 17, wherein
   - the at least one light source causes a combined overall illumination depending on at least one parameter of the at least one adjustable light source, wherein the combined overall illumination illuminates at least one part of the object or at least part of the background.
Embodiment 19:
   The apparatus according to any of the embodiments 8 to 18, wherein
   - the combined overall illumination illuminates at least a part of the background and spares at least a part of the object, if the tracking information indicates an orientation of the object outside a predefined range of orientations,.
Embodiment 20:
   The apparatus according to any of the embodiments 8 to 19, wherein
   - the combined overall illumination is configured to counteract an illumination difference between the object and the background.
Embodiment 21:
   An apparatus comprising at least one processor and at least one memory including computer program code, the at least one memory and the computer program code configured to, with the at least one processor, cause an apparatus at least to perform and/or control the method of any of the embodiments 1 to 9.
Embodiment 22:
   A system comprising
   - at least one tracking device, arranged to determine a tracking information indicative of at least one of an orientation, a location or a distance of an object;
   - an apparatus according to any of the embodiments 10 to 19 comprising
      - at least one camera,
      - at least one adjustable light source arranged to illuminate at least a part of a field-of-view of at least one of the at least one camera, wherein the object is positioned inside or close to the field-of-view of at least one camera;
   - wherein the apparatus further comprises means for
      - receiving the tracking information from the tracking device,
      - controlling at least one parameter of the at least one adjustable light source based, at least in part, on the tracking information, and
      - capturing at least one image by means of at least one of the at least one camera.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or specialpurpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Having the same meaning as the expression "A and/or B", the expression "at least one of A or B" may be used herein. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category
(method/apparatus/computer program/system) may also be used in a corresponding manner in an example embodiment of any other category. It should also be understood that presence of a feature in the presented example embodiments shall not necessarily mean that this feature forms an essential feature and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The subject-matter has been described above by means of example embodiments. It should be noted that there are alternative ways and variations which are obvious to a skilled person in the art and can be implemented without deviating from the scope of the appended claims.

## Claims

1. An apparatus comprising means for:
- receiving a tracking information indicative of at least one of an orientation, a location or a distance of an object positioned inside or close to a field-of-view of at least one camera;
- controlling at least one parameter of at least one adjustable light source arranged to illuminate at least a part of the field-of-view of the at least one camera based, at least in part, on the tracking information; and
- capturing at least one image by means of at least one of the at least one camera.

2. The apparatus according to claim 1, wherein
- the apparatus comprises at least one of the at least one camera.

3. The apparatus according to one of the preceding claims, wherein
- the apparatus comprises at least one adjustable light source.

4. The apparatus according to one of the preceding claims, wherein
- the object is a head of a user.

5. The apparatus according to one of the preceding claims, wherein
- the means for receiving the tracking information are configured to receive the tracking information from a tracking device, in particular a head-tracking device, in particular a head-tracking headphones and/or a head-tracking earbuds.

6. The apparatus according to one of the preceding claims, wherein
- the apparatus is a user device.

7. The apparatus according to one of the preceding claims, wherein
- at least one of the at least one camera or the at least one adjustable light source is located on a first face of the apparatus

8. The apparatus according to one of the preceding claims, wherein
- the at least one of the at least one adjustable light source is configured to illuminate at least part of a background.

9. The apparatus according to one of the preceding claims, wherein
- the parameter is at least one of a brightness, a light color, an illumination direction, a degree of diffusion or an illumination angle.

10. The apparatus according to one of the preceding claims, wherein
- the at least one light source causes a combined overall illumination depending on at least one parameter of the at least one adjustable light source, wherein the combined overall illumination illuminates at least one part of the object or at least part of the background.

11. The apparatus according to claim 10, wherein
- the combined overall illumination illuminates at least a part of the background and spares at least a part of the object, if the tracking information indicates an orientation of the object outside a predefined range of orientations,.

12. The apparatus according to one of the claims 10 or 11, wherein
- the combined overall illumination is configured to counteract an illumination difference between the object and the background.

13. A method comprising:
- receiving a tracking information indicative of at least one of an orientation, a location or a distance of an object positioned inside or close to a field-of-view of at least one camera,
- controlling at least one parameter of at least one adjustable light source arranged to illuminate at least a part of the field-of-view of the at least one camera based, at least in part, on the tracking information,
- capturing at least one image by means of at least one of the at least one camera.

14. The method according to claim 13, wherein
- the object is a head of a user.

15. The method according to one of the claims 13 to 14, wherein
- the tracking information is obtained by a tracking device, in particular by a head-tracking device, in particular a head-tracking headphones and/or a head-tracking earbuds.

16. The method according to one of the claims 13 to 15, wherein
- the parameter is at least one of a brightness, a light color, an illumination direction, a degree of diffusion, an illumination angle.

17. A tangible computer-readable medium storing computer program code, the computer program code when executed by a processor causing an apparatus to perform and/or control:
- receiving a tracking information indicative of at least one of an orientation, a location or a distance of an object positioned inside or close to a field-of-view of at least one camera,
- controlling at least one parameter of at least one adjustable light source arranged to illuminate at least a part of the field-of-view of the at least one camera based, at least in part, on the tracking information,
- capturing at least one image by means of at least one of the at least one camera.

18. A system comprising
- at least one tracking device, arranged to determine a tracking information indicative of at least one of an orientation, a location or a distance of an object;
- an apparatus comprising
- at least one camera,
- at least one adjustable light source arranged to illuminate at least a part of a field-of-view of at least one of the at least one camera, wherein the object is positioned inside or close to the field-of-view of at least one camera;
- wherein the apparatus further comprises means for
- receiving the tracking information from the tracking device,
- controlling at least one parameter of the at least one adjustable light source based, at least in part, on the tracking information, and
- capturing at least one image by means of at least one of the at least one camera.
